# DEMANDE DE BREVET EUROPEEN

(11) **EP 0 953 547 A2**
(43) Date de publication de la demande: **03.11.1999**
(21) Numéro de dépôt: 99401029.6
(22) Date de dépôt: 28.04.1999
(51) Int. Cl.: C03B 37/06

(54) **Dispositif et procédé de fibrage pour produire de la laine minérale**

(30) Priorité: 29.04.1998 FR 9805372
(71) Demandeur: ISOVER SAINT-GOBAIN, 92400 Courbevoie (FR)
(72) Inventeur: Berthier, Guy, 71350 Alleray/Saone (FR); Bocquet, Eric, 60140 Liancourt (FR); Bernard, Jean-Luc, 60600 Clermont (FR)
(74) Mandataire: Renous Chan, Véronique

(57) **Abrégé**

L'invention a pour objet un dispositif de fibrage statique pour produire de la laine minérale comportant :
↪ des moyens d'amenée (30, 31) aptes à délivrer des filets de matière minérale en fusion à proximité de moyens pneumatiques d'étirage,
↪ des moyens pneumatiques détirage comportant au moins un moyen pour générer un courant gazeux chaud dit principal (5) et un moyen pour générer au moins un jet gazeux (6) dit secondaire dont la direction d'écoulement est convergente avec celle du courant gazeux principal. Ces moyens d'amenée comprennent des canaux alimentés en matière minérale en fusion débouchant sur des orifices de sortie par lesquels s'écoulent lesdits filets, notamment dans une structure de type filière, au moins une partie desdits canaux étant groupée en paires de canaux A, B alimentés respectivement en une matière A et une matière B, s'achevant en deux orifices accolés (35b, 36b) ou adjacents, ou se rejoignant en un canal commun AB (40) s'achevant en un orifice commun (41).

## Description

La présente invention concerne un dispositif et un procédé de fibrage pour produire de la laine minérale, la laine minérale ainsi obtenue et ses diverses applications, notamment pour constituer des matériaux d'isolation thermique ou phonique ou encore des substrats de culture hors-sol.

Les techniques de fibrage sont principalement de deux sortes, celles mettant en oeuvre une centrifugation des matières minérales en fusion, et celles où les matières minérales en fusion passant dans une filière statique pour être ensuite étirées par des moyens mécaniques et/ou pneumatiques (frottement de fluide). Usuellement, un seul type de composition de matière est fibré. Cependant, il a été développé les adaptations de ces techniques de fibrage où l'on alimente les machines de fibrage avec deux types de compositions différentes par exemple en alimentant avec deux filets de verre en fusion différents, une assiette de fibrage dans le cas d'une technique de fibrage par centrifugation interne. Si l'on choisit des compositions dont les coefficients de dilatation thermique α sont significativement différents, les fibres obtenues se trouvent être des fibres " bi-composantes " qui, en se refroidissant, présentent une grande souplesse, un aspect curviligne " conférant à la laine minérale dans son ensemble un aspect particulièrement aéré, un " gonflant" important et une reprise d'épaisseur élevée après compression. On pourra par exemple se reporter aux brevets US-2 998 620 et WO95/12554.

Des fibres bi-composantes ont également été obtenues par des techniques de fibrage statique et ont par exemple été décrites dans les brevets US-5 639 291 et WO96/34835.

L'invention a alors pour but l'amélioration d'un dispositif et/ou procédé de fibrage du type " statique " permettant l'obtention de fibres bi-composantes, amélioration visant notamment la qualité et la diversité des fibres obtenues, le rendement du procédé, sa souplesse/simplicité de mise en oeuvre, une conception plus fiable du dispositif, ... .

L'invention a tout d'abord pour objet un dispositif de fibrage statique pour produire de la laine minérale qui comporte :
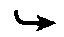 des moyens d'amenée aptes à délivrer des filets de matière minérale en fusion à proximité de moyens pneumatiques d'étirage,
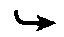 des moyens pneumatiques d'étirage comportant au moins un moyen pour générer un courant gazeux chaud dit " principal " et un moyen pour générer au moins un jet gazeux dit " secondaire " dont la direction d'écoulement est convergente avec celle du courant principal.

Les moyens d'amenée comprennent des canaux alimentés en matière minérale en fusion débouchant sur des orifices de sortie par lesquels s'écoulent des filets, les canaux étant assemblés notamment dans une structure de type filière. Au moins une partie des canaux sont groupés en " paires " de canaux A, B alimentés respectivement en une matière minérale en fusion de type A et une matière minérale en fusion de type B, et les canaux A et B de chacune de ces paires s'achèvent en deux orifices de sortie accolés ou adjacents, ou encore se rejoignent en un canal commun AB s'achevant en un orifice commun.

On comprend au sens de l'invention par " laine minérale " tout matériau fibreux obtenu à partir de matières vitrifiables étirables, du type verre, roche, basalte, ... .

On comprend au sens de l'invention par orifices " adjacents " des orifices suffisamment proches pour n'être distants l'un de l'autre que d'au plus la plus grande dimension de l'un d'entre eux. De façon préférentielle, il faut que les orifices soient véritablement accolés.

En jouant ainsi sur les différences de composition, et donc de propriétés, des matières A et B, l'invention permet d'obtenir des fibres de type bi-composantes très variées, que l'on détaillera par la suite. L'invention exploite en outre une technique de fibrage de type statique, qui, par rapport aux techniques de fibrage par centrifugation, est de mise en oeuvre moins délicate, et qui sollicite moins les pièces mécaniques entrant dans la conception des machines de fibrage. En outre, une technique " statique " peut offrir un meilleur contrôle de la formation des fibres bi-composantes, une haute régularité de production dans la mesure où chaque filière ne comporte généralement qu'une seule rangée de trous, et non pas toute une succession de rangées, comme dans les assiettes de fibrage par centrifugation interne.

L'invention a cependant privilégié une technique " statique" bien particulière, dite " TOR ", qui a recours à un étirage pneumatique avec deux types de courant gazeux et jusque là jamais utilisée pour fabriquer des fibres bi-composantes. Cette technique est notamment détaillée dans les brevets FR-2 362 222, FR-2 374 440, US-4 194 897, US-4 118 213 et US-4 389 232, documents auxquels on se rapportera pour plus de détails. Le principe de cette technique, décrit dans le brevet FR-2 362 222, repose sur un étirage en deux phases :
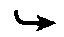 la première étant obtenue en amenant le filet de matière en fusion à un jet gazeux porteur (secondaire) isolé de façon à être entraîné par ce dernier et être ainsi partiellement étiré en forme d'un filament continu, la rencontre du courant avec le jet porteur étant obtenue par les effets d'induction du jet,
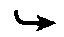 le second étirage étant obtenu en créant un courant principal (de gaz chaud) qui est dirigé suivant un trajet transversal qui intercepte le jet porteur en aval du point où le filet de matière en fusion est amené au jet porteur. Les dimensions transversales du courant principal sont plus grandes que celles du jet porteur et ce jet porteur a une énergie cinétique par unité de volume plus grande que celle du courant principal, ce qui produit ainsi une zone d'interaction du jet porteur et du courant principal par pénétration du courant par le jet et en amenant le filament obtenu dans la zone d'interaction, complétant ainsi la transformation du filet en fibre.

Différentes variantes sont possibles, dont celle consistant à dévier à l'aide de déflecteurs la trajectoire des jets secondaires de façon à ce qu'ils butent les uns contre les autres, engendrant ainsi des tourbillons, comme décrit dans le brevet FR-2 374 440, ou celle exploitant un effet Coanda comme décrit dans le brevet US-4 389 232 . Dans le contexte de l'invention, la variante consistant à favoriser la création de tourbillons gazeux paraît particulièrement favorable à l'obtention de fibres bi-composantes curvilignes, " bouclées " (courbure obtenue par effet bi-lame en choisissant de co-fibrer des compositions présentant un écart suffisant dans leurs coefficients de dilatation thermique).

La technique " TOR " permet ainsi l'obtention de fibres spéciales de type bi-composante en conciliant rendement et simplicité de mise en oeuvre, l'efficacité du double étirage de la technique TOR permettant d'atteindre des tirées exprimées en kg par trou et par jour élevées, d'au moins 10 kg/trou/jour, notamment la rapprochant des tirées globales élevées obtenues par des techniques de centrifugation interne, tout en conservant les bénéfices d'un fibrage statique.

Selon l'invention une configuration préférée des orifices accolés, adjacents ou communs évoqués plus haut consiste à ce que ces orifices délivrent des filets de matières A et B présentant une interface, notamment dès la formation des " cônes d'écoulement " desdits filets.

La terminologie utilisée ci-après " cône d'écoulement " et " avant-fibres " se rapporte aux différents stades de la fibre en formation au sortir des orifices des canaux, ayant effectivement la forme approximative d'un cône dans le cas où les orifices de sortie de la filière sont circulaires, et s'amincissant progressivement pour former des fibres discontinues sous l'effet des gaz d'étirage.

On comprend par " cône d'écoulement " la goutte de matériau minéral fondu de forme approximativement conique quand la section de l'orifice est circulaire. On garde pour plus de simplicité le terme de " cône " dans le cadre de l'invention même si les orifices ne sont plus circulaires et s'ils délivrent deux types de matière au lieu d'une. " L'avant-fibre " est la fibre qui est encore attachée au cône d'écoulement par une de ses extrémités, elle a la légèreté suffisante pour être animée de mouvements vibratoires qui caractérisent le procédé de l'invention par étirage pneumatique en deux temps.

Il est en effet avantageux, pour assurer la solidarisation définitive des filets A et B en une fibre unique, que ceux-ci puissent être en contact l'un de l'autre dès leur sortie des orifices des canaux, voire avant même leur sortie quand on a recours à un orifice commun.

Il faut cependant éviter qu'ils ne se mêlent trop étroitement, pour garder la spécificité des deux compositions A et B au sein de la fibre finale.

Avantageusement, la configuration de ces orifices est également conçue de façon à autoriser un impact substantiellement identique des moyens pneumatiques d'étirage utilisés sur les filets de matières A et B qu'ils délivrent. Il est en effet préférable que les filets A et B, en sortie d'orifices, recoivent notamment simultanément la même énergie thermique procurée par le courant gazeux principal chaud, afin d'assurer un fibrage conjoint correct, une bonne compatibilité de comportement des deux filets.

Toujours pour favoriser cette compatibilité et la création d'une interface entre les filets A et B, les orifices accolés ou adjacents évoqués plus haut seront de préférence de formes géométriques complémentaires, notamment symétriques l'une de l'autre. Les modes de réalisation les plus simples consistent à choisir deux demi-cercles, ou deux demi-ovales.

Dans le cas d'un canal commun débouchant en un orifice commun, celui-ci aura de préférence un forme circulaire ou ovale.

Selon un mode de réalisation, les orifices communs, accolés ou adjacents évoqués plus haut peuvent déboucher dans ce que l'on désigne communément sous l'appellation de " tétons réservoirs ", permettant à une certaine masse des filets A et B de s'y accumuler avant d'y échapper par gravité. Ces réservoirs assurent notamment la continuité du fibrage.

La façon dont on alimente en entrée les canaux A et B varie suivant les propriétés des compositions A et B que l'on sélectionne, notamment leur comportement viscosimétrique. Si elles ont des températures de liquidus et des viscosités analogues, il est envisageable de n'utiliser qu'un seul moyen d'alimentation en matières A et B, du type creuset, que l'on munit de moyens de cloisonnement pour séparer les deux matières.

Avantageusement, ce creuset est muni de moyens de chauffage, notamment au niveau de ces moyens de cloisonnement. Il peut s'agir d'amenées de courant électrique dans le cas le plus fréquent où le creuset et ses moyens de cloisonnement sont essentiellement métalliques, par exemple en platine rhodié.

Si les compositions A et B sont significativement différentes, et doivent notamment être fondues à des températures différentes, et/ou si l'une est beaucoup plus fluide que l'autre, il peut s'avérer nécessaire d'avoir recours à deux moyens d'alimentation séparés pour chacune des deux matières, du type creusets indépendants, chacun munis de leurs moyens de chauffage propres.

Selon une configuration préférée, les canaux A et B selon l'invention sont percés dans une filière dont l'axe longitudinal est placé sensiblement perpendiculairement à l'axe de projection du courant gazeux chaud principal. Dans ce cas, on peut prévoir que les orifices d'entrée des canaux A et B soient disposés de part et d'autre du plan médian de la filière (vertical), notamment de façon symétrique par rapport audit plan. Dans ce cas toujours, il est avantageux que les orifices de sortie des canaux A, B ou AB présentent une symétrie axiale transversalement au plan médian de la filière ; cette symétrie, clarifiée par la suite à l'aide des dessins, permet notamment que les filets A et B " voient " en même temps et de façon identique les moyens d'étirage gazeux employés, comme mentionné plus haut.

Dans la filière, les canaux peuvent définir des trajectoires, au moins dans leur portion terminale, qui sont rectilignes ou courbes, selon un même plan ou " tournant " dans des plans différents, point également clarifié à l'aide des dessins par la suite.

L'invention a également pour objet le procédé de mise en oeuvre du dispositif de fibrage décrit plus haut, où l'on opère un étirage pneumatique conjoint des filets de matières A et B en les amenant dans la zone d'interaction du courant gazeux principal et des jets gazeux secondaires, de façon à obtenir des fibres bi-composantes AB.

Pour obtenir des fibres bi-composantes " curvilignes " ou " bouclées ", il est préférable que les compositions des matières A et B présentent un écart Δα dans leurs coefficients de dilatation thermique α_{A} et α_{B} d'au moins 20.10⁻⁷ K⁻¹.

L'avantage de la technique de fibrage " TOR " est qu'elle autorise le co-fibrage de matières minérales très différentes, et qu'elle peut permettre d'associer en fibres bi-composantes des matières minérales dites " tendres " du type verre et dites " dures " telles que la roche ou le basalte, ce qui ouvre le champ à des fibres bi-composantes extrêmement diverses, pouvant être non seulement " curvilignes " mais également avoir des propriétés originales.

L'invention a également pour objet les produits d'isolation thermique ou phonique ou les substrats de culture hors-sol comportant au moins pour partie les fibres bi-composantes A et B décrites plus haut.

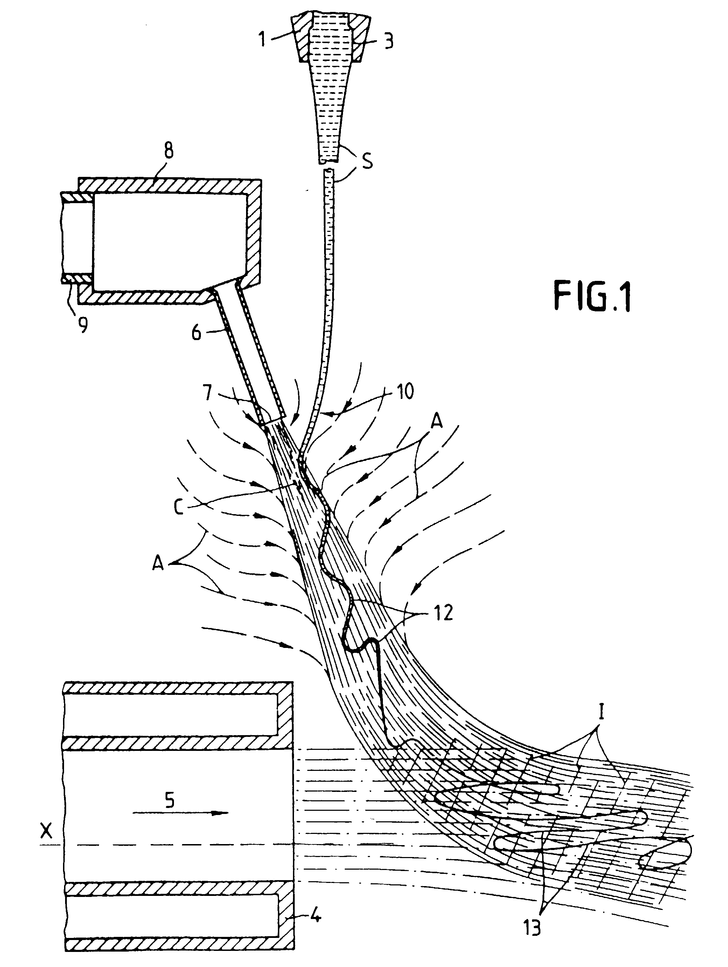

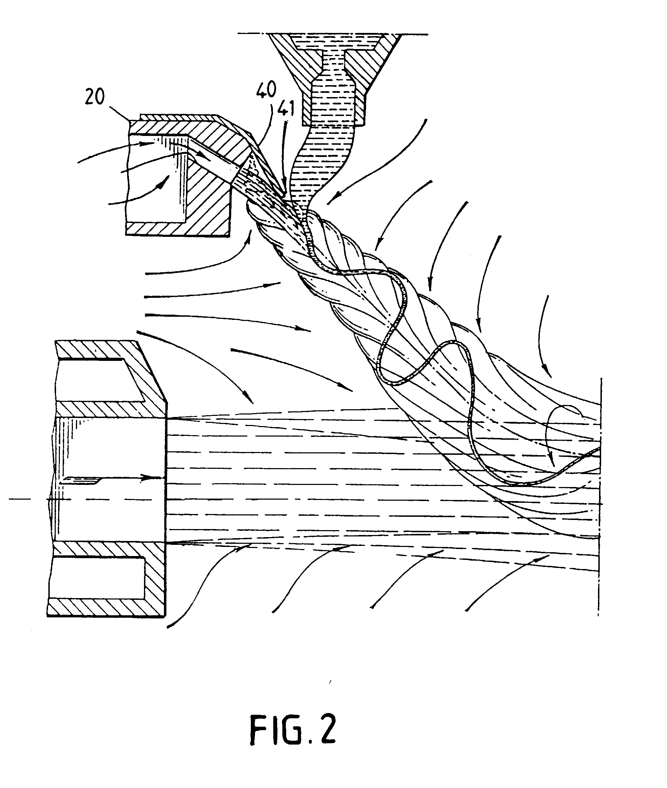

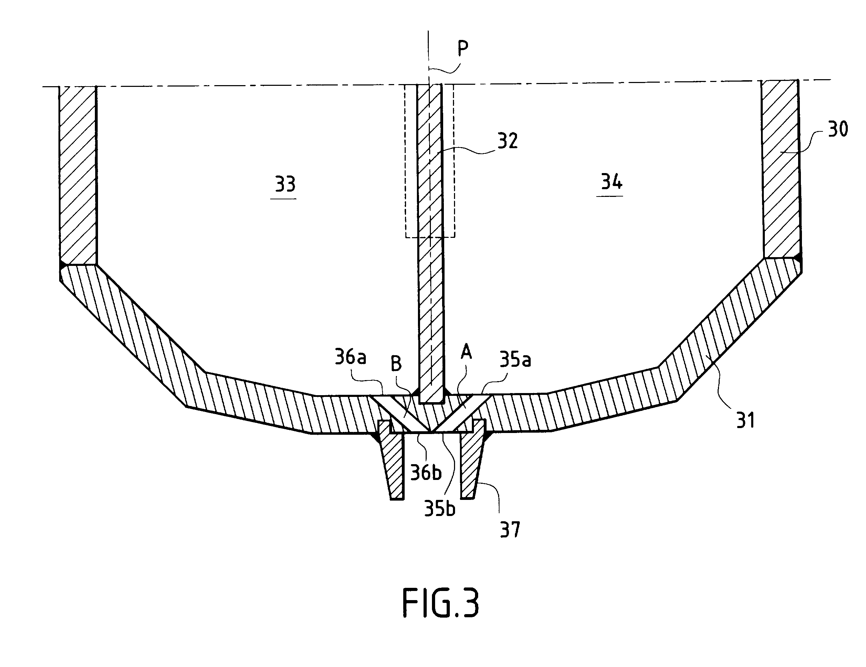

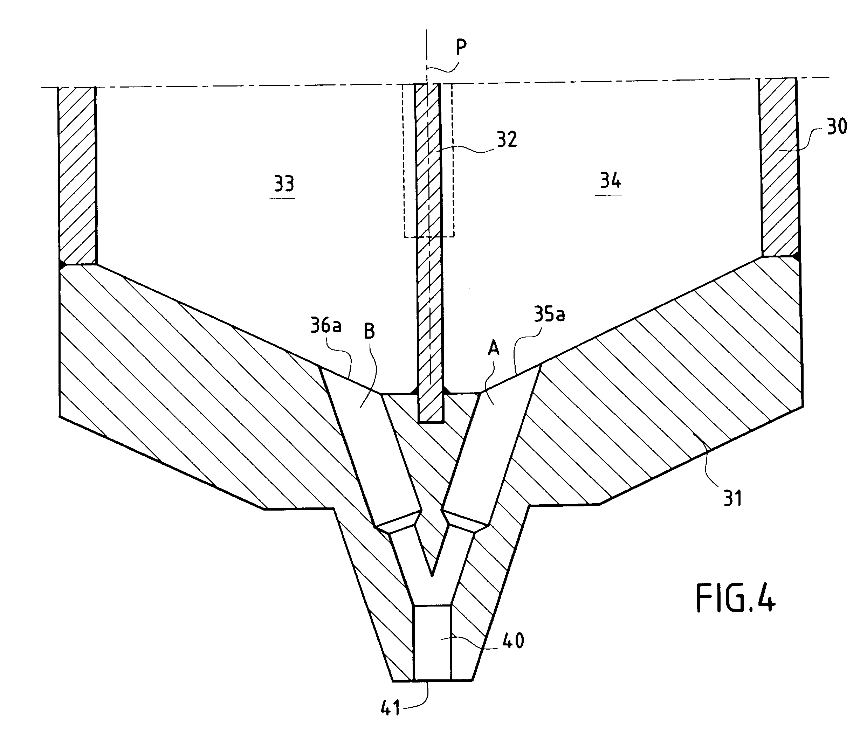

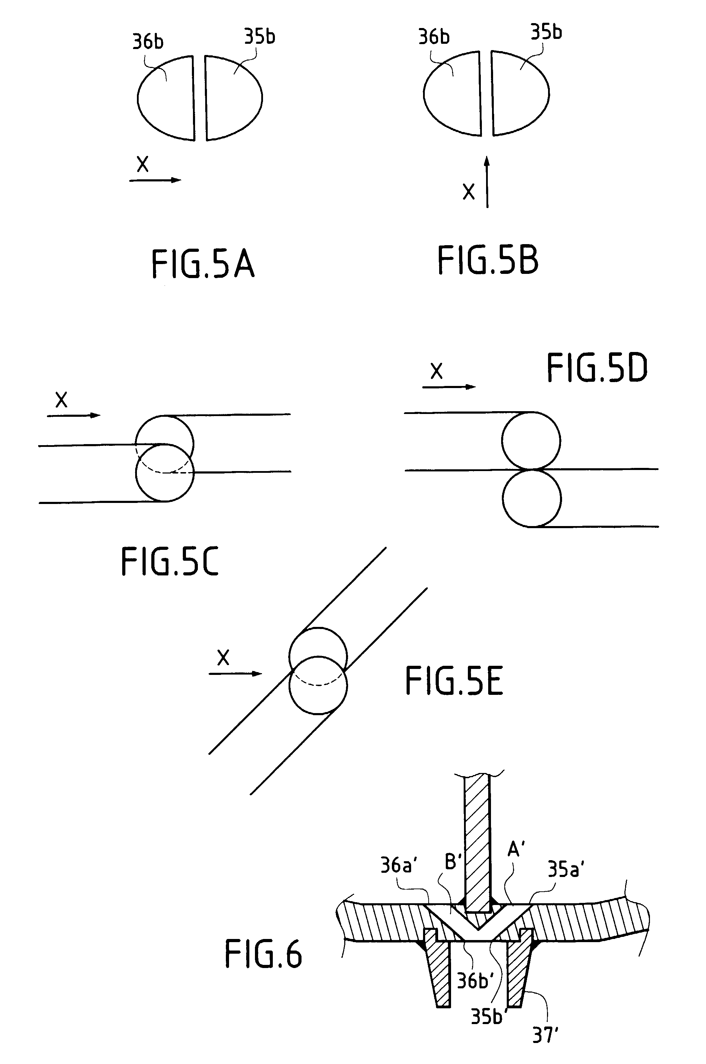

L'invention sera détaillée ci-après à l'aide d'exemples non limitatifs illustrés par les figures suivantes :
□ **figure 1 :** une représentation schématique en coupe d'une première variante de dispositif de fibrage selon l'invention,
□ **figure 2 :** une représentation schématique en coupe d'une seconde variante de dispositif de fibrage selon l'invention,
□ **figure 3 :** une représentation schématique en coupe d'une première variante de filière faisant partie du dispositif selon la figure 1 ou selon la figure 2,
□ **figure 4 :** une représentation schématique en coupe d'une seconde variante de filière faisant partie du dispositif selon la figure 1 ou selon la figure 2,
□ **figure 5** : une représentation schématique en vue de dessous de filières selon l'invention,
□ **figure 6 :** une variante de la figure 3.

Les compositions A et B utilisées pour obtenir des fibres bi-composantes AB curvilignes peuvent être notamment choisies parmi celles décrites dans le brevet US-2 998 620 ou celles décrites dans la demande de brevet français FR97/07523 du 17 juin 1997.

On retient ci-après quatre exemples utilisant des paires " de compositions A, B.

Les tableaux 1 à 4 ci-dessous regroupent pour chacune d'elles, les compositions chimiques en pourcentages pondéraux des compositions A et B, leurs coefficients de dilatation thermique α en °C⁻¹, le cas échéant leur température de liquidus (T_{liq}) en °C, la température à laquelle leur viscosité est, en poises, égale à log 1,5 (T_{log1,5}) en °C également.

**TABLEAU 1**

| **EXEMPLE 1** | **A** | **B** |
|---|---|---|
| SiO₂ | 54,2 | 72,7 |
| Al₂O₃ | 14,6 | 2,0 |
| CaO | 17,3 | 5,6 |
| MgO | 4,6 | 3,3 |
| B₂O₃ | 8,4 | - |
| Na₂O | 0,6 | 15,6 |
| K₂O | - | 0,2 |
| TiO₂ | - | - |
| ZrO₂ | - | - |
| Fe₂O₃ (fer total) | 0,2-0,3 | 0,2-0,3 |
| α | 50.10⁻⁷ | 87.10⁻⁷ |

**TABLEAU 2**

| **EXEMPLE 2** | **A** | **B** |
|---|---|---|
| SiO₂ | 57,81 | 56,3 |
| Al₂O₃ | 0,65 | 2,7 |
| CaO | 7,95 | 8,4 |
| MgO | 3,4 | 3,4 |
| Na₂O | 17,9 | 9,7 |
| K₂O | 0,02 | 0 |
| B₂O₃ | 11,9 | 19,25 |
| α | 97,5.10⁻⁷ | 69,8.10⁻⁷ |
| T_{log1,5} | 1313 | 1359 |
| T_{liq} | 860 | 970 |

**TABLEAU 3**

| **EXEMPLE 3** | **A** | **B** |
|---|---|---|
| SiO₂ | 51,5 | 61,8 |
| Al₂O₃ | 18 | 2,5 |
| Fe₂O₃ (fer total) | 10,1 | - |
| TiO₂ | 0,66 | 0 |
| CaO | 8,9 | 6,9 |
| MgO | 6,4 | 2,5 |
| Na₂O | 3,5 | 19,6 |
| K₂O | 0,61 | 1,9 |
| P₂O₅ | 0,2 | 0 |
| B₂O₃ | 0 | 4,6 |
| α | 65.10⁻⁷ | 110,3.10⁻⁷ |
| T_{log1,5} | 1471 | 1440 |

**TABLEAU 4**

| **EXEMPLE 4** | **A** | **B** |
|---|---|---|
| SiO₂ | 53,5 | 71,6 |
| Al₂O₃ | 14,5 | 1,95 |
| Fe₂O₃ (fer total) | 0,2 | 0,2 |
| TiO₂ | 0 | 0,05 |
| CaO | 21,5 | 10,1 |
| MgO | 0,5 | 1,72 |
| Na₂O | 0,4 | 13,1 |
| K₂O | 0,2 | 0,71 |
| P₂O₅ | 0 | 0 |
| B₂O₃ | 8,5 | 0 |
| α | 53-57.10⁻⁷ | 85.10⁻⁷ |
| T_{log1,5} | 1529 | 1622 |

Les figures 1 et 2 illustrent deux variantes de la technique de fibrage utilisées dans l'invention et adaptées des enseignements des brevets FR-2 362 222 et FR-2 374 440 précités, en vue de fabriquer des fibres bi-composantes : (on utilisera pour les matières A et B le terme de " verre " pour plus de simplicité, sachant qu'il peut s'agir de toute matière minérale en fusion, aussi bien de type verre que de type roche ou basalte).

Sur la figure 1 est représentée une filière 1 alimentée en matières fondues A et B par un creuset à cloison, détaillé aux figures suivantes. Des orifices en partie inférieure de la filière 1 délivrent des filets accolés de matières A et B fondues vers le bas, par gravité. Un courant gazeux principal à haute température 5 est émis par une buse 4 dans une direction généralement horizontale sous la filière et transversalement à l'axe longitudinal de celle-ci.

Ce courant gazeux principal 5 peut provenir d'un générateur comportant un brûleur, de sorte qu'il se compose surtout de gaz de combustion, avec ou sans air additionnel.

A une hauteur intermédiaire entre la partie inférieure de la filière 1 et le courant principal 4, sont disposés des tubes à jet 6, ayant chacun un orifice de sortie 7 et étant alimentés en gaz par la tuyère 8, elle-même alimentée via un raccord 9 partiellement représenté. Les gaz pour l'alimentation des tubes à jet 6 peuvent provenir d'un générateur à brûleur et les produits de combustion peuvent servir à les alimenter. De préférence, ils sont délivrés avec de l'air de façon à éviter de trop hautes températures. Chaque tube à jet 6 et son orifice 7 sont disposés de façon à émettre un jet gazeux dit secondaire dirigé vers le bas, convergeant vers la trajectoire des filets A et B. On voit que le coeur des jets secondaires 6 provoque l'induction de courants d'air indiqués par les lignes A, la quantité d'air induit ainsi produite augmentant progressivement le long de la trajectoire des jets 6. Quand le corps du jet 6, c'est-à-dire le gaz du coeur du jet mélangé avec l'air induit, atteint la limite du courant principal 5, une zone d'interaction est formée dans la région indiquée par les hachures.

En tenant compte de ce qui précède, on considère maintenant deux filets de verre A, B accolés et leur comportement en ce qui concerne le jet porteur et le courant principal. Comme il a été précisé auparavant, les filets de verre sont amenés par un orifice commun ou deux orifices accolés (ce qui sera détaillé par la suite) à une certaine distance au-dessus du courant et également à une distance notable au-dessus de la sortie du jet gazeux porteur. De préférence, l'orifice de sortie du verre est situé de telle façon qu'il délivre les filets de verre qui, tombant sous l'effet de gravité, prennent une direction rencontrant l'axe du jet en un point nettement au-dessus de la limite supérieure du courant principal et par conséquent aussi au-dessus de la zone d'interaction. A mesure que les filets de verre se rapprochent du jet porteur, ils sont influencés par les courants d'air induits et donc forcés de s'infléchir vers le jet porteur au-dessus du point où les filets de verre auraient autrement rencontré l'axe dudit jet.

L'effet d'induction force les filets de verre à s'approcher du jet et, selon la position de l'orifice de sortie du verre, cet effet d'induction force les filets de verre, soit à entrer dans le corps principal du jet à un niveau en aval du coeur, soit à entrer dans l'enveloppe ou les couches environnantes d'air induit. Dans les deux cas, les filets de verre suivent une trajectoire qui mène dans la zone de mélange et lesdits filets se déplacent à l'intérieur du corps du jet en descendant jusqu'à la zone d'interaction dans le courant principal.

Les filets de verre sont donc portés par les courants d'air induits dans la zone de mélange du jet porteur, mais ils ne pénètrent pas le coeur du jet. Les filets de verre peuvent être portés jusqu'à la surface du coeur par l'air induit mais sans pouvoir pénétrer dans le coeur du jet, ce qui est souhaitable pour éviter une fragmentation du filet de verre. Comme les filets de verre se trouvent à ce moment sous l'influence de la zone de mélange du jet, il sont soumis à un étirage préliminaire, et la vitesse augmente au fur et à mesure qu'ils s'approchent de la limite supérieure du courant principal. Outre cette action d'étirage, qui est de nature aérodynamique, les filets en cours d'étirage sont soumis à certaines autres forces dynamiques ayant tendance à augmenter l'étirage. Cette dernière action d'étirage résulte de la tendance des filets à se déplacer vers le centre du jet et, ensuite, à être renvoyés vers la limite du jet, et à se soumettre à l'influence de l'air induit. Les filets sont ensuite obligés de revenir dans l'intérieur du jet. Cette impulsion répétée complète l'action d'étirage aérodynamique.

Les filets de verre partiellement étirés sont introduits ensuite dans la zone d'interaction du jet porteur et du courant principal, en partie en raison de l'accélération du verre résultant de l'effet de la gravité et en raison de l'étirage préliminaire décrit ci-dessus, et en partie sous l'influence des courants établis dans la zone d'interaction elle-même.

On voit donc que, suivant l'invention, les filets de verre sont soumis à deux stades d'étirage successifs.

La figure 2 est une variante du procédé de la figure 1, adaptée de l'enseignement du brevet FR-2 374 440. On y retrouve les éléments décrits à la figure 1, mais il est ici prévu que les filets de verre A, B soient soumis à une déviation ou à un guidage au moyen d'un déflecteur qui coopère avec les jets pour engendrer les paires de tourbillons contra-rotatifs utilisés au moins pour l'étirage primaire, mais aussi pour amener les filets partiellement étirés dans les zones d'interaction créées par la pénétration des jets dans le courant principal. En vue d'engendrer les paires de tourbillons contra-rotatifs de jet, on utilise un déflecteur tel qu'une plaque déflectrice 40 associée et commune à un groupe d'orifices d'émission des filets A, B. Dans le cas où les jets sont subdivisés en groupes, chaque groupe étant associé à une nourrice 20, chacune de ces nourrices comporte de préférence une plaque déflectrice 40. La plaque déflectrice revêt de préférence la forme d'une tôle pliée.

Cette position de la plaque déflectrice 40 et de son bord 41 provoque l'impact de chacun des jets contre la face interne de la plaque 40, ce qui cause un épanouissement desdits jets.

Les figures 3 d'une part et 4 d'autre part, explicitent la façon dont les filières sont adaptées pour délivrer les filets de verre AB accolés évoqués plus haut.

Selon la variante de la figure 3, est représentée la partie basse d'un creuset 30 en platine rhodié débouchant en une filière 31 du même matériau. Le creuset est muni d'une cloison 32 du même matériau qui est fixée au creuset par soudure et qui sépare longitudinalement le creuset en deux compartiments 33, 34 indépendants, chacun alimenté par des moyens non représentés respectivement en verre en fusion A et en verre en fusion B. La cloison passe ainsi par le plan médian longitudinal P de la filière. Le creuset est muni de moyens aptes à le maintenir à température élevée, notamment des amenées de courant, ainsi que la cloison 32. Ce creuset " commun " est particulièrement indiqué quand les verres A et B sont de comportements thermiques/viscosimétriques analogues.

La filière 31 est percée sur toute sa longueur de " paires " de canaux A et B, dont les orifices d'entrée 35a, 36a sont circulaires, d'un diamètre d'environ 1,5 à 2 mm. Les canaux sont rectilignes, convergeant dans un même plan pour déboucher en deux orifices de sorties 35b, 36b accolés, ayant chacun en sortie la forme de deux demi-ellipses. On obtient ainsi un orifice de sortie " global " à peu près circulaire, d'un diamètre d'environ 2,3 à 3 mm. Est également prévu en sortie de chacun de ces orifices de sortie 35b, 36b un téton réservoir 37.. L'utilisation des tétons reste optionnelle.

La figure 6 illustre une variante de la figure 3 : les canaux A' et B' convergent davantage l'un vers l'autre, ce qui peut faciliter la mise en contact des deux filets de verre.

Selon la variante de la figure 4, concentrée comme la figure 3 sur la partie basse du creuset et la filière, on voit que les canaux A, B convergent et se rejoignent en un canal commun 40 avant que ce dernier ne débouche en un orifice circulaire 41 en sortie de filière. (Les dimensions des orifices sont similaires à ceux de la figure 3) : ici, on contraint les filets de verre A, B à s'accoler dans la filière même.

Dans les variantes des figures 3 et 4, le plan longitudinal médian P de la filière est tel que le courant gazeux principal, représenté par des flèches, va donc se trouver selon un axe x perpendiculaire audit plan, dans un plan inférieur. Vu la configuration des trous, les filets de verre A seront donc " impactés " par ce courant principal ainsi que par les jets secondaires 6 de manière légèrement différente des filets de verre B, ce qui dans la majorité des cas ne perturbe pas leur co-fibrage, ce qui est représenté à la figure 5a, représentant les deux orifices de sortie 35b, 36b en vue de dessous, et l'axe de projection x du courant gazeux principal 5. Cela peut même favoriser le " nappage " de l'un des filets de verre autour de l'autre.

On peut cependant prévoir de configurer ces orifices communs 35a, 36b et 41 de façon à ce que dès leur sortie de filière les filets de verre A et B reçoivent la même quantité d'énergie thermique et le même impact des courants, jets gazeux utilisés pour les étirer. Deux solutions sont envisageables: on peut faire pivoter la filière de 90°, de façon à ce que son plan médian longitudinal P se trouve parallèle à l'axe de projection du courant gazeux principal 5, ce qui est représenté à la figure 5b.

Pour assurer cependant, en outre, que l'ensemble des " paires " de canaux A et B soient à une même distance des moyens pneumatiques d'étirage, on peut conserver la configuration filière/courant principal des figures 3 et 4, mais adapter les canaux des filières: au lieu d'être rectilignes convergentes, on peut les rendre convergentes avec une trajectoire courbe dans des plans différents. Dans le cas des trous accolés sur le principe de la figure 3, on obtient alors la même géométrie d'orifice global associant deux orifices semi-circulaires, mais ayant " pivoté " de 90° comme cela ressort de la figure 5b. L'axe de symétrie horizontal des deux orifices semi-circulaires passant par leur paroi commune se trouve alors parallèle à l'axe de projection du courant gazeux principal, alors qu'il était perpendiculaire dans le cas de la figure 3. Si l'on choisit un orifice de sortie commun selon le principe de la figure 4, on peut également prévoir que les canaux A et B " tournent " de façon à ce que dans le canal commun AB les filets A et B aient " pivoté " de 90°.

Les variantes 5c, 5d et 5e de la figure 5 concernent des variantes d'orifices accolés par exemple obtenus avec la configuration de la figure 6. Les canaux A et B peuvent " tourner ", et l'on peut donc avoir des arrivées du courant gazeux principal selon des directions variables, par exemple obliques (figure 5e).

En conclusion, l'invention a permis d'adapter une technique de fibrage statique par double étirage gazeux efficace pour fabriquer des fibres bi-composantes avec beaucoup plus de liberté que pourrait offrir un co-fibrage par centrifugation interne, notamment dans la variété des matières A et B que l'on peut associer, sans trop sacrifier le rendement de production et avec des matériaux utilisés dans les dispositifs de fibrage moins susceptibles de corrosion que ceux utilisés dans les techniques " centrifuges ".

## Revendications

1. Dispositif de fibrage statique pour produire de la laine minérale comportant :
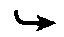 des moyens d'amenée (30, 31) aptes à délivrer des filets de matière minérale en fusion à proximité de moyens pneumatiques d'étirage,
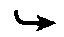 des moyens pneumatiques détirage comportant au moins un moyen pour générer un courant gazeux chaud dit principal (5) et un moyen pour générer au moins un jet gazeux (6) dit secondaire dont la direction d'écoulement est convergente avec celle du courant gazeux principal, ***caractérisé en ce que*** lesdits moyens d'amenée comprennent des canaux alimentés en matière minérale en fusion débouchant sur des orifices de sortie par lesquels s'écoulent lesdits filets, notamment dans une structure de type filière, au moins une partie desdits canaux étant groupée en paires de canaux A, B alimentés respectivement en une matière A et une matière B, s'achevant en deux orifices accolés (35b, 36b) ou adjacents, ou se rejoignant en un canal commun AB (40) s'achevant en un orifice commun (41).

2. Dispositif selon la revendication 1, ***caractérisé en ce que*** la configuration des orifices accolés (35b, 36b), adjacents ou communs (41) est choisie de façon à ce qu'ils délivrent des filets de matières A et B présentant une interface, notamment dès la formation des cônes d'écoulement desdits filets.

3. Dispositif selon l'une des revendications précédentes, ***caractérisé en ce que*** la configuration des orifices accolés (35b, 36b), adjacents ou communs (41) autorise un impact substantiellement identique des moyens pneumatiques d'étirage (56) sur les filets de matière A et de matière B qu'ils délivrent.

4. Dispositif selon l'une des revendications précédentes, ***caractérisé en ce que*** les orifices accolés/adjacents (35b, 36b) sont de formes géométriques complémentaires, notamment symétriques l'une de l'autre, notamment du type demi-cercle, demi-ovale.

5. Dispositif selon l'une des revendications 1 à 3, ***caractérisé en ce que*** les orifices communs (41) sont de forme circulaire ou ovale.

6. Dispositif selon l'une des revendications précédentes, ***caractérisé en ce que*** les orifices communs (41), accolés (35b, 36b) ou adjacents débouchent dans des tétons réservoirs.

7. Dispositif selon l'une des revendications précédentes, ***caractérisé en ce que*** les canaux A, B sont alimentés en matière A et B par un unique moyen d'alimentation du type creuset (30) muni de moyen(s) de cloisonnement (32) ou par deux moyens d'alimentation séparés pour les matières A et B, du type creusets indépendants.

8. Dispositif selon l'une des revendications précédentes, ***caractérisé en ce que*** les canaux A et B sont percés dans une filière (31) dont le plan médian longitudinal P) est placé sensiblement perpendiculairement à l'axe de projection (x) du courant gazeux chaud principal (5).

9. Dispositif selon la revendication 8, ***caractérisé en ce que*** les orifices d'entrée des canaux A et B sont disposés de part et d'autre du plan longitudinal médian (P) de la filière (31), notamment de facon symétrique par rapport audit plan.

10. Dispositif selon la revendication 8 ou la revendication 9, ***caractérisé en ce que*** les orifices de sortie (35b, 36b) des canaux A, B ou AB présentent une symétrie axiale transversalement au plan médian (P) de la filière (31).

11. Dispositif selon l'une des revendications précédentes, ***caractérisé en ce que*** les canaux sont percés dans une filière (31) et définissent une trajectoire, au moins dans leur partie terminale, rectiligne ou courbe, dans un même plan ou non.

12. Procédé de mise en oeuvre du dispositif selon l'une des revendications précédentes, ***caractérisé en ce qu'on*** opère un étirage pneumatique conjoint des filets de matière A et B, en les amenant dans la zone d'interaction du courant principal (5) et des jets secondaires (6), de façon à obtenir des fibres bi-composantes AB.

13. Procédé selon la revendication 12, ***caractérisé en ce qu'on*** choisit les matières A et B ayant des coefficients de dilatation thermique α présentent un écart Δα d'au moins 20.10⁻⁷ K⁻¹, de type verre et/ou de type roche, basalte.

14. Procédé selon la revendications 12 ou la revendication 13, ***caractérisé en ce qu'on*** choisit les matières A et B, l'une de type " tendre " tel qu'un verre, l'autre de type " dur " tel que de la roche, du basalte.

15. Produit d'isolation thermique ou phonique ou des substrats de culture hors-sol comportant au moins pour partie les fibres bi-composantes AB obtenues avec le dispositif selon l'une des revendications 1 à 11 ou le procédé selon l'une des revendications 13 ou 14.
